(19) Europäisches Patentamt
European Patent Office
Office européen des brevets

(11) Veröffentlichungsnummer: 0 334 186
A2

(12) # EUROPÄISCHE PATENTANMELDUNG

(21) Anmeldenummer: 89104599.9

(22) Anmeldetag: 15.03.89

(51) Int. Cl.4: C08G 18/66 , C08L 75/04 , B32B 15/00

(30) Priorität: 25.03.88 DE 3810078

(43) Veröffentlichungstag der Anmeldung: 27.09.89 Patentblatt 89/39

(84) Benannte Vertragsstaaten: BE DE ES FR GB IT NL

(71) Anmelder: BAYER AG
D-5090 Leverkusen 1 Bayerwerk(DE)

(72) Erfinder: Goyert, Wilhelm, Dr.
Haberstrasse 48
D-5090 Leverkusen 1(DE)
Erfinder: Winkler, Jürgen
Burscheider Strasse 196
D-5090 Leverkusen 3(DE)

(54) **Thermoplastische Polymermischung und Verfahren zu ihrer Herstellung.**

(57) Verbesserte thermoplastische Polymermischungen enthalten

A) 70 bis 95 Gew.-Teile eines thermoplastischen Polyurethans A erhältlich durch Reaktion von
  a) einem Diisocyanat Aa)
  b) wenigstens einem kurzkettigen Kettenverlängerer Ab)
  c) einer Hydroxylgruppen-haltigen höhermolekularen Verbindung Ac) und

B) 30 bis 5 Gew.-Teilen wenigstens eines thermoplastischen Terephthalsäureesters B, gegebenenfalls in Abmischung mit einem weiteren Thermoplasten C
wobei bezogen auf die Summe Aa) bis Ac) der Gewichtsanteil Ac) 5 bis 20 Gew.-% beträgt.

EP 0 334 186 A2

# Thermoplastische Polymermischung und Verfahren zu ihrer Herstellung

Die Erfindung betrifft thermoplastische Polymermischungen aus thermoplastischen Polyurethanen und wenigstens einem weiteren Thermoplasten, ein Verfahren zur Herstellung sowie Formkörper, die aus der erfindungsgemäßen Polymermischung erhältlich sind.

Aus EP-A 0 131 714 sind Polymerblends aus Polyurethangläsern und Schlagzähmodifikatoren, wie z.B. Butylacrylat beschrieben. Der Zusatz thermoplastischer Polyester wird nicht angegeben. Aus der DE-A-2 731 141 ist eine Mischung aus aromatischem Polycarbonat, Polybutylenterephthalat und Polyurethan bekannt. Das hier beschriebene Polyurethan hat eine bevorzugte Shore-Härte von maximal 60 D. Das Polyurethan wird außerdem in untergeordneter Menge (20 bis 40 Teile) eingesetzt.

Aus der US-A 4 179 479 sind Abmischungen aus thermoplastischem Polyurethan mit Thermoplasten wie z.B. Polycarbonaten, Polybutylenterephthalaten und Acrylnitril/Butadien/Styrol-Copolymeren bekannt. Die in den Beispielen angegebenen Mischungen haben eine Härte von 32 bis 72 Shore D. Aus der DE-A-2 854 409 ist ein Verfahren zur Herstellung von thermoplastischen Chemiewerkstoffen durch Einspeisung eines vorgefertigten thermoplastischen Polymeren in einen Extruder und Zugabe von Polyisocyanaten und Kettenverlängerungsmitteln in einer zweiten Einspeisstelle bekannt. Weiterreißwiderstand und Verarbeitbarkeit der so erhaltenen Werkstoffe genügen zum Teil nicht den gestiegenen Anforderungen der Praxis.

Aufgabe der Erfindung war es deshalb, thermoplastische Polymermischungen mit einem verbesserten Weiterreißwiderstand und erhöhter Härte bereitzustellen, die sich gut verarbeiten lassen.

Gegenstand der Erfindung sind thermoplastische Polymermischungen aus wenigstens einem thermoplastischen Polyurethan A und wenigstens einem weiteren Thermoplasten B, bestehend im wesentlichen aus einer Mischung aus

A) 70 bis 95 Gew.-Teilen eines thermoplastischen Polyurethans erhältlich durch Reaktion von

a) einem Diisocyanat Aa)

b) wenigstens einem vorzugsweise kurzkettigen Kettenverlängerer Ab), insbesondere einem Diol, vorzugsweise mit einem Molekulargewicht von maximal 399

c) einer Hydroxylgruppen- oder Aminogruppen-haltigen höhermolekularen Verbindung Ac), vorzugsweise mit einem Molekulargewicht von 600 bis 6000

B) wenigstens einem thermoplastischen Terephthalsäureester B, gegebenenfalls in Abmischung mit wenigstens einer weiteren thermoplastischen Komponente C, wobei auf 70 bis 95 Gew.-Teile A 30 bis 5 Gew.-Teile B + C enthalten sind

mit der Maßgabe, daß, bezogen auf die Summe Aa) bis Ac) der Gewichtsanteil von Ac) 5 bis 20 Gew.-%, bevorzugt 6 bis 15 Gew.-% beträgt und das das Verhältnis NCO-Gruppen der Komponente Aa) zu den Zerewitinoff-aktiven Gruppen der Komponenten Ab) und Ac) 0,9 bis 1,15, bevorzugt 0,97 bis 1,03 beträgt.

In einer bevorzugten Ausführungsform wird die Komponente B ohne Zusatz der Komponente c) verwendet. In einer anderen bevorzugten Ausführungsform werden, bezogen auf die Summe der Komponenten B und C, wenigstens 20, insbesondere wenigstens 50 Gew.-Teile B eingesetzt.

Die erfindungsgemäßen Polymermischungen haben vorzugsweise einen Biege-E-Modul nach DIN 53452 von wenigstens 800 MPa, insbesondere von 1400 bis 3000 MPa und eine Shorehärte D nach DIN 53505 von wenigstens 72, insbesondere 75 bis 90 Shore-D.

Die erfindungsgemäßen Mischungen vereinigen überraschenderweise die erforderlichen Eigenschaften optimal. Die Festigkeiten, insbesondere Verschleißfestigkeit und Weiterreißwiderstand sind extrem hoch. Die Weiterverarbeitung ist im Gegensatz zur Weiterverarbeitung anderer Mischungen ohne Vakuumtrocknung des Granulates möglich. Mit den erfindungsgemäßen Mischungen aufgebaute Formkörper zeigen keine Entmischungserscheinungen, wie z.B. opakes Aussehen. Trotz des hohen E-Moduls von vorzugsweise mehr als 1400 MPa bzw. der hohen Shore-D-Härte weisen die erfindungsgemäßen Mischungen noch hohe Bruchdehnungswerte und ein hervorragendes Kälteschlagverhalten auf. Die Mischungen zeigen weiterhin eine Verbesserung im Hinblick auf Ausdehnungskoeffizienten, Benzinbeständigkeit, Quellung in polaren Lösungsmitteln und Hydrolysebeständigkeit. Überraschend ist, daß sich Produkte mit einem so hohen Schmelzbereich wie Polybutylenterephthalate so gut mit einem thermoplastischen Polyurethan vertragen.

Erfindungsgemäß zu verwendende Diisocyanate Aa) sind die an sich bekannten aliphatischen, cycloaliphatischen, araliphatischen, aromatischen und heterocyclischen Diisocyanate des Standes der Technik. Erfindungsgemäß bevorzugte Diisocyanate sind aromatische Diisocyanate, Naphthylen-1,5-diisocyanat, 3,3′-Dimethyl-4-4′-diisocyanatodiphenyl (TODI), 1,4-Diisocyanatobenzol und das entsprechend hydrierte Produkt, Toluylendiisocyanate und insbesondere die Diphenylmethyldiisocyanat-Isomeren. Besonders bevorzugt ist das 4,4′-Diisocyanatodiphenylmethan oder sein Isomerengemisch mit bis zu 5 Mol-%, vorzugsweise

1 bis 4 Mol-%, des 2,4′-Diisocyanatodiphenylmethans, zumeist begleitet von sehr geringen Mengen des 2,2′-Diisocyanato-diphenylmethan-Isomeren.

Die genannten Diisocyanate können gegebenenfalls zusammen bis etwa 15 Mol-% (bezogen auf Diisocyanat) eines höherfunktionellen Polyisocyanates eingesetzt werden; die Menge des höherfunktionellen Polyisocyanats muß jedoch so begrenzt werden, daß ein noch schmelzbares bzw. thermoplastisches Polyurethanelastomeres erhalten wird. Eine größere Menge an höherfunktionellen Isocyanaten muß im allgemeinen durch die Mitverwendung von im Durchschnitt weniger als difunktionellen Hydroxyl-bzw. Aminoverbindungen bzw. auch von Monoisocyanaten ausgeglichen werden, so daß eine zu weit gehende chemische Vernetzung des Produktes vermieden wird. Beispiele für höherfunktionelle Isocyanate und monofunktionelle Verbindungen sind ebenfalls aus dem oben zitierten Stand der Technik zu entnehmen. Beispielsweise seien Monoamine wie Butyl- oder Dibutylamin, Hydroxylamin, Stearylamin, N-Methylstearylamin, Pyrrolidon oder Tetrahexylamin bzw. Butanonoxim, sowie Monoalkohole wie Butanol-1, 2-Ethylhexanol-1, Dodecanol-1, Isobutanol oder tert.-Butanol, Cyclohexanol oder Ethylenglykolmonomethylether erwähnt.

Bevorzugte Kettenverlängerungsmittel Ab) sind z.B. die in DE-A-23 02 564, 24 23 764, 25 49 372, 24 02 840, 24 57 387 und 28 54 384 beschriebenen Verbindungen. Es sind dies insbesondere niedermolekulare Polyalkohole, vorzugsweise Diole, Diamine, insbesondere aliphatische Diamine, Hydrazine und Hydrazidderivate. Als Diamine seien Diethyl-toluylendiamine, oder Isophorondiamin genannt. Auch Aminoalkohole wie Ethanolamin, Diethanolamin, n-Methyldiethanolamin, 3-Aminopropanol oder Ver bindungen wie Hydrazin (Hydrat) oder Carbodihydrazid kommen erfindungsgemäß in Frage. Bevorzugte Kettenverlängerungsmittel sind Diole wie z.B. Ethylenglykol, Di-und Triethylenglykol, Hexandiol-1,6 und Hydrochinon-di-ß-hydroxyethylether, sowie besonders bevorzugt das Butandiol-1,4 gegebenenfalls in Gemischen mit anderen Diolen, insbesondere Hexandiol-1,6. Bevorzugt werden Gemische von 96 bis 80 Mol-% Butandiol-1,4 mit 4 bis 20 Mol-% Hexandiol-1,6. Das Molekulargewicht der Kettenverlängerer liegt bei 32 bis 399, bevorzugt bei 62 bis 220.

Bevorzugte Hydroxylgruppen-haltige höhermolekulare Verbindungen Ac) sind Polyester-, Polyestercarbonat- und insbesondere bevorzugt Polyetherdiole, z.B. Polyesterdiole aus geradkettigen oder verzweigten aliphatischen und/oder cycloaliphatischen Diolen und aliphatischen Dicarbonsäuren, insbesondere Adipinsäure. Sie können jedoch auch untergeordnete Mengen an aromatischen Dicarbonsäuren, insbesondere Phthalsäure und gegebenenfalls auch Terephthalsäure, sowie deren Hydrierungsprodukte enthalten. Ferner sind geeignet Hydroxylpolycarbonate, Hydroxypolycaprolactone. In einer bevorzugten Ausführungsform wird wenigstens eine Komponente C zugegeben, wenn Ac ein Polyester ist, wobei besonders bevorzugt Acrylnitril/Butadien/Styrol-Pfropfcopolymerisat (ABS) als Komponente C anwesend ist.

Bevorzugt werden Hydroxypolyetherdiole auf Basis Ethylenoxid, Propylenoxid oder Mischpolyether aus Propylenoxid und/oder Ethylenoxid und/oder Tetrahydrofuran.

Besonders geeignet sind Hydroxyetherdiole auf Basis Tetrahydrofuran mit einem Molgewicht von 1000 bis 3000. Geeignete Polyole werden z.B. in den deutschen Offenlegungsschriften 23 02 564, 24 23 764, 25 49 372 (US-PS 3 963 679), DE-OS 24 02 840 (US-PS 3 984 607), DE-AS 24 57 387 (US-PS 4 035 213) und in der DE-OS 2 854 384, 2 920 501 und 3 405 531 eingehend beschrieben.

Gegebenenfalls können auch höhermolekulare Polyaminoverbindungen, vorzugsweise mit primären aromatischen Aminogruppen eingesetzt werden. Bevorzugte Vertreter werden beispielsweise durch Hydrolyse von entsprechenden NCO-Prepolymeren auf der Basis von höhermolekularen Polyhydroxyverbindungen und überschüssigen aromatischen Diisocyanaten durch (vorzugsweise basische) Hydrolyse hergestellt. Beispiele für diese Verfahren werden in DE-A-2 948 419, DE-A-3 039 600, DE-A-3 112 118, EP-A-61 627, EP-A-71 132 und EP-A-97 869 angegeben. In der erstgenannten Patentschrift werden auch weitere Verfahren des Standes der Technik zur Herstellung von aromatischen Aminoverbindungen höhermolekularer Struktur, sogenannter Aminopolyether, genannt, wie sie für das erfindungsgemäße Verfahren geeignet sind. Weitere Herstellungsverfahren werden in der DE-AS 1 694 152, FR-PS 1 415 317 oder DE-AS 1 155 907 beschrieben.

Vor und/oder bei und/oder nach der Polyurethan-Reaktion können selbstverständlich die üblichen Katalysatoren, Trennmittel, Antistatika, Flammschutzmittel, Füllstoffe, Glasfasern und Einfärbemittel nach dem Stand der Technik (siehe z.B. DE-A-28 54 409, DE-OS 29 20 501 und DE-PS 33 29 775) zugegeben werden.

Als Katalysatoren können so z.B. tertiäre Amine, organische Metallverbindungen, insbesondere organische Zinn-, Blei- und Titanverbindungen eingesetzt werden, z.B. Zinn-II-acetat, Zinn-II-ethylhexoat, Dibutylzinndilaurat oder Bleiacetat.

Als Trennmittel werden vorzugsweise Wachse oder Öle verwendet, ferner z.B. langkettige Verbindungen mit Carboxyl-, Ester-, Amid-, Urethan- oder Harnstoffgruppen sowie auch Silicone, wie sie als Trennmittel

beispielsweise in der DE-OS 2 204 470 aufgeführt sind.

Die Mengen an Reaktionskomponenten Aa) bis Ac) für die Polyurethane werden im erfindungsgemäßen Verfahren in der Regel so gewählt, daß das NCO/OH-Äquivalentverhältnis von Isocyanat zu OH-Verbindungen zwischen 0,9 und 1,15, bevorzugt 0,97 und 1,03 liegt.

Bevorzugte Polyterephthalsäureester B sind insbesondere Polybutylenterephthalat (PBT) und Polyethylenterephthalat (PET), die beispielsweise gemäß US-A-2 465 319, US-A-2 597 643, US-A-4 034 016, US-A-3 740 371, US-A-4 018 738 oder Europäische Patentschrift 0 064 207 hergestellt werden können.

Bevorzugte Polyester B lassen sich aus Terephthalsäure (oder ihren reaktionsfähigen Derivaten) und Alkandiolen mit 2 bis 10 C-Atomen nach bekannten Methoden herstellen (Kunststoff-Handbuch, Bd. VIII, S. 695 ff, Carl Hanser Verlag, München 1973).

Bevorzugte Polyalkylenterephthalate B enthalten mindestens 80, vorzugsweise mindestens 90 Mol-%, bezogen auf die Dicarbonsäurekomponente, Terephthalsäurereste und mindestens 80, vorzugsweise mindestens 90 Mol-%, bezogen auf die Diolkomponente, Ethylenglykol- und/oder Butandiol-1,4-reste.

Die bevorzugten Polyalkylenterephthalate B können neben Terephthalsäureresten bis zu 20 Mol-% Reste anderer aromatischer Dicarbonsäuren mit 8 bis 14 C-Atomen, aliphatischer Dicarbonsäuren mit 4 bis 12 C-Atomen enthalten, wie z.B. Reste von Phthalsäure, Isophthalsäure, Naphthalin-2,6-dicarbonsäure, Diphenyl-4,4′-dicarbonsäure, Bernstein-, Adipin-, Sebacinsäure, Azelainsäure und Cyclohexandiessigsäure.

Die bevorzugten Polyalkylenterephthalate B können neben Ethylenglykol- bzw. Butandiol-1,4-resten bis zu 20 Mol-% anderer aliphatischer Diole mit 3 bis 12 C-Atomen oder cycloaliphatischer Diole mit 6 bis 21 C-Atomen enthalten, z.B. Reste von Propandiol-1,3, 2-Ethylpropandiol-1,3, Neopentylglykol, Pentan-diol-1,5, Hexandiol-1,6, Cyclohexan-dimethanol-1,4, 3-Methylpentandiol-2,4, 2-Methylpentandiol-2,4, 2,2,4-Trimethylpentandiol-1,3 und -1,6, 2-Ethylhexandiol-1,3, 2,2-Diethylpropandiol-1,3, Hexandiol-2,5, 1,4-Di($\beta$-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-hydroxypropoxyphenyl)-propan (DE-OS 2 715 932).

Die Polyalkylenterephthalate B können durch Einbau relativ kleiner Mengen 3- oder 4-wertiger Alkohole oder 3- oder 4-basischer Carbonsäuren, wie sie z.B. in der DE-OS 1 900 270 und der US-PS 2 692 744 beschrieben sind, verzweigt werden. Beispiele bevorzugter Verzweigungsmittel sind Trimesinsäure, Trimellithsäure, Trimethylolethan und -propan und Pentaerythrit. Es ist ratsam, nicht mehr als 1 Mol-% des Verzweigungsmittels, bezogen auf die Säurekomponente, zu verwenden.

Besonders bevorzugt sind Polyalkylenterephthalate B, die allein aus Terephthalsäure oder deren reaktionsfähigen Derivaten (z.B. deren Dialkylestern) und Ethylenglykol oder Butandiol-1,4 hergestellt worden sind.

Die als Komponente B vorzugsweise verwendeten Polyethylenterephthalate besitzen im allgemeinen eine Intrinsic-Viskosität von 0,4 bis 1,5 dl/g, vorzugsweise 0,5 bis 1,3 dl/g, insbesondere 0,6 bis 1,2 dl/g, und die als Komponente B verwendeten Polybutylenterephthalate besitzen im allgemeinen eine Intrinsic-Viskosität von 0,7 bis 1,5 dl/g, vorzugsweise 0,8 bis 1,3 dl/g, insbesondere 0,8 bis 1,05 dl/g, jeweils gemessen in Phenol/o-Dichlorbenzol (1:1 Gew.-Teile) bei 25 °C in 0,5 %iger Lösung.

Anstelle der Homo- oder Copolyester können auch die Mischungen dieser Polyester eingesetzt werden. Bevorzugte Mischungen bestehen aus

a) 1-99, vorzugsweise 10-80, insbesondere 30-60 Gew.-% Polyethylenterephthalat und

b) 99-1, vorzugsweise 90-20, insbesondere 70-40 Gew.-% Poly(1,4-butylenterephthalat).

Besonders bevorzugt ist Poly(1,4-butylenterephthalat).

Die erfindungsgemäßen Polyester-Formmassen können übliche Additive, wie Gleit- und Entformungsmittel, Nucleiermittel, Stabilisatoren, Füll- und Verstärkungsstoffe, Flammschutzmittel sowie Farbstoffe enthalten.

Die gefüllten bzw. verstärkten Formmassen können bis zu 60, vorzugsweise 10 bis 50, Gew.-% bezogen auf die Formmasse, eines Füllstoffes und/oder Verstärkungsstoffes enthalten. Bevorzugte Verstärkungsstoffe sind Glasfasern. Bevorzugte Füllstoffe, die auch verstärkend wirken können, sind Glaskugeln, Glimmer, Silikate, Quarz, Talkum, Titandioxid, Wollastonit.

Die mit Flammschutzmitteln ausgerüsteten Polyester-Formmassen enthalten Flammschutzmittel in einer Konzentration von im allgemeinen weniger als 30 Gew.-%, bezogen auf die Formmassen.

Es kommen alle bekannten Flammschutzmittel, wie z.B. Polyhalogendiphenyl, Polyhalogendiphenylether, Polyhalogenphthalsäure und ihre Derivate und Polyhalogenpolycarbonate, wobei die entsprechenden Bromverbindungen besonders wirksam sind. Außerdem enthalten sie in der Regel einen Synergisten, wie z.N. Antimontrioxid.

Bevorzugte weitere thermoplastische Polymere C sind Polycarbonate, besonders bevorzugt sind ABS-Pfropfcopolymerisate. Bei den ABS-Pfropfpolymerisaten handelt es sich um elastisch-thermoplastische

Produkte, welche im wesentlichen aus den Monomeren Acrylnitril, Butadien und Styrol bzw. α-Methylstyrol aufgebaut sind. Butadien kann ganz oder teilweise durch eine andere Kautschukkomponente ersetzt sein, z.B. durch einen Ethylen-Propylen-1,5-Dien-Methylenkautschuk (EPDM-Kautschuk) oder Acrylkautschuke.

Diese Polymerisate werden in an sich bekannter Weise durch Emulsions-, Suspensions-, Masse- und Lösungspolymerisation bzw. Kombinationen dieser Verfahren hergestellt, wie es z.B. von C.H. Basdekis in "ABS-Plastics" Reinhold Publishing Corporation, New York, 1964, beschrieben wird.

Erfindungsgemäß bevorzugte ABS-Polymerisate C sind Mischungen aus

- Ca) 5-70 Gew.-% eines oder mehrerer elastomerer Pfropfprodukte und
- Cb) 95-30 Gew.-% eines oder mehrerer thermoplastischer nicht-elastomerer Harze.

Pfropfprodukte Ca) sind bevorzugt Polymerisate, die durch Polymerisation von Pfropfmonomeren in Anwesenheit eines Kautschuks als Pfropfbasis erhalten werden. Der Kautschukanteil beträgt dabei ca. 5 bis 80 Gew.-% und wird durch das Polymerisationsverfahren mitbestimmt.

Als Pfropfbasis kommen insbesondere Polybutadien-, Butadien/Acrylnitril- und Butadien/Styrol-Polymerisate sowie Butadien-Styrol-Blockpolymerisate in Betracht. Pfropfmonomere sind hauptsächlich Styrol, Gemische aus Styrol und Acrylnitril, bevorzugt im Gewichtsverhältnis 90:10 bis 50:50, Gemische aus Styrol und Methylmethacrylat, bevorzugt im Gewichtsverhältnis 5:95 bis 95:5, sowie Styrol-Acrylnitril-Methylm ethacrylat-Gemische.

Das den zweiten Bestandteil der ABS-Polymerisate bildende thermoplastische Harz Cb) bildet die kontinuierliche Phase (Matrix) und ist z.B. ein Polymerisat oder Copolymerisat von Styrol, α-Methylstyrol, Acrylnitril, Methylmethacrylat und Maleinsäureanhydrid.

Bevorzugt sind Polystyrol, Styrol-Acrylnitril-Copolymerisate mit einem Acrylnitril-Gehalt von 20 bis 35 Gew.-% sowie α-Methylstyrol-Acrylnitril-Copolymere mit einem Acrylnitril-Gehalt von 20 bis 31 Gew.-%. Das Gewichtsmittel des Molekulargewichts dieser Harze ist meist 50.000 bis 550.000. Die molekulare Uneinheitlichkeit, ausgedrückt durch den Wert $(M_w/M_n)-1 = U_n$ ist 1,0 bis 3,5.

Als besonders bevorzugte Polycarbonate C kommen die durch Umsetzung von Dihydroxydiarylalkanen mit Phosgen oder Diestern der Kohlensäure erhältlichen Polykondensate in Betracht, wobei neben den unsubstituierten Dihydroxydiarylalkanen auch solche geeignet sind, deren Arylreste in o- und/oder m-Stellung zur Hydroxylgruppe Methylgruppen oder Halogenatome tragen. Ebenso sind verzweigte Polycarbonate geeignet. Diese Polycarbonate haben im allgemeinen mittlere Molekulargewichte zwischen 10 000 und 100 000, vorzugsweise zwischen 20 000 und 40 000.

Geeignete aromatische Dihydroxyverbindungen sind z.B. Hydrochinon, Resorcin, 4,4′-Dihydroxydiphenyl, Bis-(hydroxy-phenyl)-alkane wie beispielsweise $C_1$-$C_8$-Alkylen-bzw. $C_2$-$C_8$-Alkyliden-bisphenole, Bis-(hydroxyphenyl)-cycloalkane wie beispielsweise $C_5$-$C_{15}$-Cycloalkylen- bzw. $C_5$-$C_{15}$-Cycloalkylidenbisphenole, Bis-(hydroxy-phenyl)-sulfide, -ether, -ketone, -sulfoxide oder -sulfone.

Ferner α,α′-Bis-(hydroxyphenyl)-diisopropylbenzol sowie die entsprechenden kernalkylierten bzw. kernhalogenierten Verbindungen. Bevorzugt sind Polycarbonate auf Basis von Bis-(4-hydroxy-phenyl)-propan-2,2 (Bisphenol A), Bis-(4-hydroxy-3,5 dichlor-phenyl)-propan-2,2 (Tetrachlorbisphenol A), Bis-(4-hydroxy-3,5-dibrom-phenyl)-propan-2,2 (Tetrabrombisphenol A), Bis-(4-hydroxy-3,5-dimethyl-phenyl)-propan-2,2 (Tetramethylbisphenol A), Bis-(4-hydroxy-phenyl)-cyclohexan-1,1 (Bisphenol Z) sowie auf Basis von Dreikernbisphenolen wie α,α′-Bis-(4-hydroxyphenyl)-p-diisopropylbenzol.

Weitere, für die Herstellung von Polycarbonaten geeignete Bisphenole sind in den US-Patenten 3 028 365, 2 999 835, 3 148 172, 3 271 368, 2 970 137, 2 991 273, 3 271 367, 3 280 078, 3 014 891 und 2 999 846 beschrieben.

Bevorzugte Polycarbonate können grundsätzlich als solche definiert werden die wiederkehrende Carbonatgruppen

$$-O-\overset{\overset{O}{\|}}{C}-O$$

und an diese Carbonatgruppen geknüpfte Einheiten der Formel



besitzen (vgl. US-Patentschrift 3 070 563).

Besonders bevorzugte aromatische Polycarbonate weisen wiederkehrende Struktureinheiten der Formel

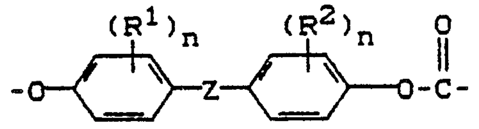

auf, worin

Z eine Einfachbindung, ein Alkylen- oder Alkylidenrest mit 1 bis 7 C-Atomen, ein Cycloalkylen- oder Cycloalkylidenrest mit 5 bis 12 C-Atomen, ein Sauerstoffatom, ein Schwefelatom, eine -CO-, -SO-oder $-SO_2$-Gruppe, vorzugsweise Methylen oder Isopropyliden,

$R^1$ und $R^2$ ein Wasserstoffatom, ein Halogenatom oder ein Alkylen- oder Alkylidenrest mit 1 bis 7 C-Atomen und

n eine ganze Zahl von 0 bis 4 sind.

Bevorzugte aromatische Polycarbonate haben einen Schmelzindex von etwa 1 bis 24 g pro 10 Minuten bei 300 °C, gemessen nach ASTM D-1238.

Das wegen seiner Verfügbarkeit wichtigste aromatische Polycarbonat ist das Polycarbonat auf Basis von Bis-(4-hydroxyphenyl)-2,2-propan, bekannt als Bisphenol A Polycarbonat; im Handel erhältlich z.B. in 4 Handelsformen der Mobay Chemical Corporation, USA, als Merlon M 39 (Schmelzindex etwa 12 bis 24), M 40 (Schmelzindex etwa 6 bis 12), M 50 (Schmelzindex etwa 3 bis 6) und M 60 Schmelzindex <3 [g/10 Min] bei 300 °C). Der Zug-E-Modul dieser Typen liegt bei etwa 2300 MPa (DIN 53 457).

Andere erfindungsgemäß geeignete Thermoplaste C sind Polystyrol (insbesondere schlagzähes Polystyrol), aromatische Polyether (z.B. Polyphenylenoxid) und Polyether-Weichsegmente enthaltendes Polybutylenglykolterephthalat. Polymerisate dieser Art werden z.B. von Vieweg et al. im "Kunststoff-Handbuch", Bd. II, IV-VII, IX und XI, Carl Hanser Verlag, München, 1963-1971, und von Hans-Jürgen Saechtling im "Kunststofftaschenbuch", 20. Ausgabe, Carl Hanser Verlag, München-Wien, 1977, beschrieben.

Die erfindungsgemäßen Polymermischungen sind beispielsweise für folgende Anwendungen besonders geeignet: Halbzeuge, Profile, Spielzeuge, Sitzschalen, Schutzhelme, Pumpengehäuse, Pumpendichtungen, Rohre, Tennisschlägerrahmen, Gehäuse für Werkzeuge und Bohrmaschinen, Pumpenteile, Schalenkoffer sowie Automobilaußenteile wie Stoßfänger, Radabdeckungen, Spoiler, Kühlergrill und Scheinwerfergehäuse. Sie sind besonders geeignet für Artikel mit hoher Verschleißfestigkeit, sehr hohem Weiterreißwiderstand und hoher Bruchdehnung wie Stoßleisten, Schuhteile, Siebelemente, Dübel und Türbeschläge. Die Polymergemische können vorzugsweise mit Metallteilen, z.B. aus Stahl, Eisen und Aluminium flächig verschraubt, verklebt, aufgespritzt oder anders verbunden werden. So können Verbundwerkstoffe verschiedenster Art wie z.B. Stoßleisten, Stoßfänger etc. hergestellt werden.

Die Verwendung entsprechender Formkörper oder Verbundwerkstoffen daraus ist gleichfalls Gegenstand der Erfindung.

Die Formteile aus den Polymermischungen können durch Spritzgießen, Extrudieren, Kalandern, Extrusionsblasen, d.h. durch die üblichen thermoplastischen Formgebungsprozesse erhalten werden.

Die erfindungsgemäßen thermoplastischen Polymermischungen können in unterschiedlicher Weise hergestellt werden. In einer bevorzugten Ausführungsform wird der Polyurethanthermoplast nach dem Band- oder Schnecken-Verfahren hergestellt (siehe Becker/Braun, Kunstoffhandbuch, Band 7: Polyurethane, Kapitel 8.2.1 Seite 428 ff, Carl Hanser Verlag München, Wien 1983). Das thermoplastische Polyurethan kann dann in einem zweiten Schritt mit dem Terephthalsäureester B und gegebenenfalls den weiteren Thermoplasten C gemischt und zu Formkörpern verarbeitet werden. In einer bevorzugten Ausführungsform wird eine Zweischneckenknetmaschine verwendet wobei man in eine erste Einspeisstelle die für die Polyurethanbildung erforderlichen Komponenten einspeist und dann vorzugsweise noch während der Polyurethanbildung im mittleren Teil der Zweischneckenknetmaschine die Thermoplasten B und gegebenenfalls C zudosiert, verwiesen wird in diesem Zusammenhang auf das in der DE-PS 2 302 564 beschriebene Verfahren.

Die genannten Polyurethan-bildenden Komponenten Aa) bis Ac) können über eine einzige oder auch über mehrere Einspeisstellen in den Extruder eingebracht werden. Man kann die Komponenten sowohl getrennt als auch vorvermischt in die Schneckenmaschine einbringen, siehe DE-A-28 42 806. Insbesondere bei der Verwendung von aminofunktionellen Kettenverlängerungsmitteln ist es jedoch empfehlenswert, zunächst ein Umsetzungsprodukt aus dem Polyisocyanat und der höhermolekularen Polyhydroxylverbindung herzustellen. Als Isocyanatkomponente A) dient in diesem Falle also ein relativ hochmolekulares, NCO-Gruppen aufweisendes Voraddukt.

Beispiele

Herstellung der erfindungsgemäßen thermoplastischen PU-Elastomeren auf einer Zweiwellenknetmaschine

Bei den Beispielen wird eine Zweiwellenschneckenknetmaschine z.B. des Typs ZSK 53 V der Fa. Werner & Pfleiderer, Stuttgart, mit selbstreinigendem Wellenbesatz und einem Knetelementanteil von ca. 20 % verwendet. Der Verfahrensteil besteht aus 12 separat heizbaren Gehäusen, die Länge des Verfahrensteils entspricht etwa dem 20-fachen Wellendurchmesser.

Die Verweilzeiten der Reaktionsschmelze in der Schneckenmaschine betragen in der Regel 0,3 bis 30, bevorzugt 0,5 bis 4 Minuten. Die Temperaturen der Schneckengehäuse liegen zwischen etwa 60 und 300°C (ca. 80 bis 280°C) in der Einzugszone; ca. 100 bis 300° in der Mitte des Extruders und ca. 120 bis 250°C in der Austragszone). Die aus dem Extruder austretende Schmelze wird nach an sich bekannten Verfahren abgeschreckt und zerkleinert. Die Herstellung der thermoplastischen Polyurethanelastomeren erfolgt mit folgenden Ausgangsstoffen in den angegebenen Gewichtsteilen, wobei die Zusammensetzung des Polyurethanelastomer mit Polytetramethylenetherdiolen als langkettiges Diol bei allen Beispielen gleich ist und bei der Beschreibung der folgenden Beispiele als PU-Anteil (Komponente A) bezeichnet wird.

Zusammensetzung des PU-Anteils

Aa) 66,06 Gew.-% 4,4′-Diisocyanatodiphenylmethan, enthalten ca. 2,5 Gew.-% 2,4′-Isomeres
Ab) 20,79 Gew.-% Butandiol-1,4
2,08 Gew.-% Hexandiol-1,6
Ac) 5,20 Gew.-% Polytetramethylenetherdiol, Molekulargewicht 1000
5,20 Gew.-% Polytetramethylenetherdiol, Molekulargewicht 2000
0,31 Gew.-% Pentaerythrityl-tetrakis-3-(3,5-di-t-butyl-4-hydroxyphenyl)-propionat (Irganox-1010-Ciba-Geigy)
0,16 Gew.-% 2,6-Di-t-butyl-4-methyl-phenol
0,21 Gew.-% Cyanacrylsäureester (UV-Absorber 340, BAYER AG)

Das NCO/OH-Verhältnis beträgt 1,03:1.

Die Komponente Ac) wird aus dem 120°C heißen Vorlagekessel über eine Zahnradpumpe in das Gehäuse 1 einer Zweiwellenknetmaschine eindosiert. Ebenfalls in das Gehäuse 1 wird über eine Zahnradpumpe das Diolgemisch Ab) mit einer Temperatur von 60°C dosiert. Die Komponente Aa) wird mit 60°C über eine Zahnradpumpe ebenfalls in das Gehäuse 1 gepumpt. Die kein Polyurethan enthaltenden Thermoplaste bzw. deren Gemische (Komponente B der Ansprüche) werden über eine Schüttelrinne in die Schneckenmitte eingebracht. An der Schneckenmaschine wurden folgende Gehäusetemperaturen eingestellt:

| Gehäuse | 1 | 2/3 | 4/5 | 6/7 | 8/9 | 11/12 | Kopf |
|---|---|---|---|---|---|---|---|
| Temperatur | 80°C | 200°C | 200°C | 200°C | 220°C | 200°C | 240°C |

Beispiele 1 bis 6

Bei den erfindungsgemäßen Beispielen, die in Tabelle 1 aufgelistet sind, wurde aus PU-Matrix (Komponente A) die zuvor beschriebene Rezeptur verwendet. Die Komponente B variierte.

Beispiel 1

Hierbei handelt es sich um ein Blend aus einem thermoplastischen Polyurethanelastomeren und einem thermoplastischen Polybutylenterephthalatester B mittlerer Viskosität (Intrinsic Viskosität 0,92-0,98 in 50 % o-Dichlorbenzol und 50 % Phenol bei 25°C, in 95 %iger Lösung), der nach dreitägiger Lagerung, Verspritzen auf üblichen Spritzgießmaschinen und Temperung der Probekörper von 15 h bei 110°C die in Tabelle 2, Beispiel 1 beschriebenen mechanischen Eigenschaften aufweist. Das Material läßt sich gut

thermoplastisch verarbeiten und ergibt homogene transparente Spritzlinge. Bei der Einfärbung störende Entmischungsstreifen des Hartsegments traten hier nicht auf. Die Kälteschlagzähigkeit wurde gegenüber reinem TPU mit gleicher Steifigkeit deutlich verbessert (Kerbschlagzähigkeit -20° C = 10,3 $KJ/m^2$).

Im Durchstoßversuch bei -20° C werden mit 84,7 J sehr hohe Werte erzielt. Das Bruchbild des Formkörpers zeigt ein sehr schlagzähes, nicht splitterndes, nicht sprödes Produkt an. Im übrigen wurden folgende Werte enthalten.

| Meßgröße | DIN-Norm | Wert |
|---|---|---|
| Durchstoßversuch (-20° C) | 53 443 | 84,7 J |
| Weiterreißwiderstand | 53 515 | 360 kN/m |
| Shore-D-Härte | 53 505 | 82 |
| E-Modul | 53 452 | 2085 MPa |
| linearer Ausdehnungskoeffizient | 53 752 | 120 x $10^{-6} K^{-1}$ |

Der hohe Weiterreißwiderstand ist für viele Außenanwendungen, insbesondere Automobilteile sehr günstig. Der Ausdehnungskoeffizient ist im Vergleich zu reinen Polyurethanen sehr niedrig. Der Verbund mit Stahl oder Aluminium wird hierdurch erleichtert.

Beispiel 2

Bei diesem Beispiel ist der Anteil an thermoplastischen Polyterephthalatestern doppelt so hoch, wie in Beispiel 1. Die Verarbeitung und Kälteeigenschaften sind mit Beispiel 1 identisch, die übrigen Werte ähnlich.

Beispiel 3

Im Beispiel 3 enthält der Blend neben thermoplastischem Polyurethan und Polyterephthalatester zusätzlich noch Pfropfkautschuk. Dieser Pfropfkautschuk (ABS) enthält als Elastomerkomponente Ca) ca. 30 Gew.-% Polybutadien und ca. 70 Gew.-% Harzkomponente Cb) aus Styrol und Acrylnitril. Hierdurch wurde eine zusätzliche Verbesserung der Kälteschlagzähigkeit sowie eine deutliche Erhöhung der Bruchdehnung erreicht. Produkte dieser Art sind daher für Anwendungen bevorzugt, bei denen die Kälteeigenschaften von Interesse sind.

Beispiel 4

ist eine Variation des Verhältnisses thermoplastisches Polyurethan : Polyterephthalatester : Pfropfkautschuk.

Beispiel 5

Hierbei handelt es sich um einen Blend mit vier Komponenten. Es sind thermoplastische Polyurethane, thermoplastische Polyterephthalatsäureester, Pfropfkautschuk sowie als vierte Komponente Polycarbonat. Der Zug E-Modul dieses Polycarbonats liegt bei 2300 MPa (DIN 53 457) der MFI bei 300° C, 1,2 kg bei 5-7 g/10 min. (DIN 53 735). Hierdurch wird eine Verbesserung (Erniedrigung) des thermischen Längenausdehnungskoeffizienten erreicht. Das Material arbeitet z.B. bei Außenanwendungen (Automobil) weniger als normales thermoplastisches Polyurethan.

Beispiel 6

Hier wurde gegenüber Beispiel 5 der Pfropfkautschuk weggelassen und die Mischungsverhältnisse der verbleibenden Komponenten geändert.

Die in den Beispielen 2 bis 6 beschriebenen Polyurethanelastomeren lassen sich thermoplastisch auf

für diese Zwecke üblichen Spritzgußmaschinen verarbeiten. Sie zeigen keinerlei Entmischung sowie keine Zersetzung und bereiten beim Einfärben keine Probleme. Sie haben für ein thermoplastisches Polyurethan mit dieser Steifigkeit eine sehr hohe Bruchdehnung, eine gute Kälteschlagfestigkeit und zeigen beim Kugelfallversuch -20 °C nach DIN 53 443 (Fallhöhe 1 m, Fallmasse 50 kg), daß sie nicht splittern oder wegplatzen. Ihr Weiterreißwiderstand ist sehr hoch.

Tabelle 1

| Erfindungsgemäße Beispiele | | | | | | |
|---|---|---|---|---|---|---|
| | Beispiel (Angaben in Gew.-%) | | | | | |
| | 1 | 2 | 3 | 4 | 5 | 6 |
| Komponente A | 95 | 90 | 75 | 80 | 70 | 90 |
| therm. Polyterephthalatester B | 5 | 10 | 15 | 5 | 10 | 3 |
| Pfropfkautschuk C | | | 10 | 15 | 10 | |
| Polycarbonat C | | | | | 10 | 7 |

Tabelle 2

| Eigenschaften der erfindungsgemäßen Produkte entsprechend Beispiel 1 bis 6 | | | | | | | | |
|---|---|---|---|---|---|---|---|---|
| Prüfung | DIN-Norm | Maßeinheit | 1 | 2 | 3 | 4 | 5 | 6 |
| Zugfestigkeit | 53 504 | MPa | 54,6 | 55,7 | 55,5 | 56,6 | 50,7 | 81,9 |
| Bruchdehnung | 53 504 | % | 142 | 150 | 205 | 182 | 110 | 194 |
| Weiterreißwiderstand | 53 515 | KN/m | 360 | 288 | 268 | 265 | 265 | 261 |
| Biege-E-Modul (RT) | 53 452 | MPa | 2085 | 2008 | 1937 | 1972 | 2104 | 2243 |
| Biegespannung $\sigma$bB (RT) | 53 452 | MPa | 95,9 | 95,2 | 89,4 | 92,3 | 98,8 | 112 |
| Biegespannung $\sigma$bB (-20 °C) | 53 452 | MPa | 127 | 130 | 124 | 128 | 140 | 142 |
| Kerbschlagzähigkeit -20 °C | 53 453 | KJ/m² | 10,3 | 10,3 | 17,2 | 14,5 | 12,7 | 8,1 |
| Durchstoßversuch -20 °C | 53 443 | J | 84,7 | 104 | 108 | 113 | 37,1 | 70,0 |
| Bruchbild bei dem Durchstoßversuch | | | zäh | zäh | zäh | zäh | zäh-spröde | zäh |
| therm. Längenausdehnungskoeffizient $\alpha$ | 53 752 | $K^{-1} \cdot 10^{-6}$ | 120 | 128 | 131 | 125 | 87 | |
| Shore-Härte D | 53 505 | | 82 | 82 | 79 | 81 | 83 | 87 |

Beispiel 6a

ist eine erfindungsgemäße Variation des Verhältnisses thermoplastisches Polyurethan : thermopl. Terephthalatester B : Pfropfkautschuk C (ABS) wie in Tabelle 1a aufgelistet.

Beispiel 6b

Hier wurde der Anteil der Komponente Ac verdoppelt:

Aa) 50,86 Gew.-% 4,4-Diisocyanatodiphenylmethan enthaltend ca. 2,5 Gew.-% 2,4′-Isomeres

Ab) 15,52 Gew.-% Butandiol-1,4

1,55 Gew.-% Hexandiol-1,6

Ac) 7,76 Gew.-% Polytetramethylenetherdiol, Molekulargewicht 1000

7,76 Gew.-% Polytetramethylenetherdiol, Molekulargewicht 2000

0,47 Gew.-% Pentaerythrityl-tetrakis-3-(3,5-di-t-butyl-4-hydroxyphenyl)-propionat (Irganox 1010 Ciba Geigy)

0,23 Gew.-% 2,6-Di-t-butyl-4-methyl-phenol

0,31 Gew.-% Cyanacrylsäureester (UV-Absorber 340, Bayer AG)

Das NCO/OH Verhältnis beträgt 1,03:1
Dieses TPU wurde 90/10 mit therm. Polyterephthalatester B geblendet.

Beispiel 6c

In diesem Beispiel wurde das TPU aus Beispiel 6b) 75/15/10 mit Polyterephthalatester B und Pfropfkautschuk C gemäß Beispiel 3 geblendet (siehe Tabelle 1a).

Diese beiden Beispiele entsprechen somit den erfindungsgemäßen Beispielen 2 und 3, nur wurde der Anteil an Polytetramethylenetherdiol im TPU verdoppelt.

Die mechanischen Eigenschaften sind der Tabelle 2a zu entnehmen. Die Kälteeigenschaften sind besser geworden.

Beispiel 6d

In Beispiel 6d wurde gegenüber den Beispielen 2 und 3 der Anteil an Polytetramethyletherdiol durch ein Butandiol-1,4-adipat, mit einem Molekulargewicht von 2250 ersetzt.

Die Rezeptur lautet:

Aa) 65,83 Gew.-% 4,4-Diisocyanatodiphenylmethan, enthaltend ca. 2,5 Gew.-% 2,4′-Isomeres
Ab) 20,93 Gew.-% Butandiol-1,4
2,09 Gew.-% Hexandiol-1,6
Ac) 10,47 Gew.-% Butandiol-1,4-adipat, Molekulargewicht 2250
0,31 Gew,-% Pentaerythrityl-tetrakis-3-(3,5-t-butyl-4-hydroxyphenyl)-propionat (Irganox 1010 Ciba Geigy)
0,16 Gew.-% 2,6-Di-t-butyl-4-methyl-phenol
0,21 Gew.-% Cyanacrylsäureester (UV-Absorber 340 Bayer AG)

Das NCO/OH-Verhältnis beträgt 1,03:1

Bei Beispiel 6d wurde die TPU-Matrix (Komponente A) mit den in Tabelle 1a beschriebenen Komponenten B und C während der Reaktion geblendet.

Tabelle 1a

| Erfindungsgemäße Beispiele | | | | |
|---|---|---|---|---|
| | Beispiele (Angaben in Gew.-%) | | | |
| | 6 a | 6 b | 6 c | 6 d |
| **Komponente A** | 80 | 90 * | 75 * | 75 * |
| therm. Polyterephthalatester B | 5 | 10 | 15 | 15 |
| Pfropfkautschuk C | 15 | | 10 | 10 |

*) Rezeptur siehe Versuchsbeschreibung

Tabelle 2a

| Eigenschaften der erfindungsgemäßen Produkte entsprechend Beispiel 6a bis 6d | | | | | | |
|---|---|---|---|---|---|---|
| Prüfung | DIN-Norm | Maßeinheit | 6a | 6b | 6c | 6d |
| Zugfestigkeit | 53 504 | MPa | 53,7 | 62,2 | 61,3 | 61,6 |
| Bruchdehnung | 53 504 | % | 180 | 159 | 187 | 100 |
| Weiterreißwiderstand | 53 515 | kN/m | 220 | 254 | 230 | 353 |
| Biege-E-Modul | 53 452 | MPa | 1827 | 1605 | 1594 | 2441 |
| Biegespannung $\delta$ bB (RT) | 53 452 | MPa | 80,7 | 74,8 | 72,9 | 108 |
| Durchstoßversuch (-20° C) | 53 443 | J | 104 | 102 | 110 | 92 |
| Bruchbild bei Durchstoßversuch | | | zäh | zäh | zäh | zäh |
| Shore-Härte D | 53 505 | | 80 | 78 | 77 | 83 |

<u>Nicht erfindungsgemäße Beispiele 7 bis 10</u> (zum Vergleich)

Zu den nicht erfindungsgemäßen Beispielen zählen die Ansätze 7 bis 10, sie sind in Tabelle 3 aufgeführt. Die mechanischen Eigenschaften dieser Ansätze gibt Tabelle 4 wieder.
Die Probekörper des reinen thermoplastischen Polyurethans aus Beispiel 7 haben sehr schlechte Kälteeigenschaften und zersplittern im Kugelfallversuch. Der thermische Längenausdehnungskoeffizient ist höher und hiermit sind solche Werkstoffe für den Verbund mit Stahl weniger geeignet. Der Weiterreißwiderstand liegt niedrig. Im Beispiel 8 wird Polycarbonat (Zug-E-Modul 2.3 GPA) dem thermoplastischen Polyurethan bei der Reaktion zugemischt. Dieses Material weist neben den schlechten Kälteeigenschaften auch noch Probleme bei der Verarbeitung auf. Das äußert sich in Form von Verbrennung und Zersetzung des Materials.

Die in Beispiel 9 verwendete Formulierung ergibt keine homogene Mischung, es liegen zwei Phasen nebeneinander vor. Die Kälteeigenschaften sind schlecht.

Die im Beispiel 10 beschriebene Mischung von thermoplastischem Polyurethan mit Polyamid-(6) (Zug-E-Modul 2100 MPa) konnte auf üblichen Spritzgießmaschinen nicht verarbeitet werden.

Das Material zersetzte sich vor dem Aufschmelzen.

Tabelle 3

| nicht erfindungsgemäße Beispiele | | | | |
|---|---|---|---|---|
| | Beispiel (Angaben in Gew.-%) | | | |
| | 7 | 8 | 9 | 10 |
| Komponente A | 100 | 90 | 80 | 90 |
| Polycarbonat | | 10 | | |
| Polyoxymethylen[1)] elastomermodifiziertes | | | 20 | |
| Polyamid (Durethan BC 402 der Bayer AG)[2)] | | | | 10 |

[1)] Hostaform C 9021 der Fa. Hoechst AG
[2)] Zug-E-Modul: 2100 MPa Spritzfrisch; Konditioniert: 800 MPa (DIN 53 457)
Kugeldruckhärte H 30: Spritzfrisch 90; Konditioniert 50 N/mm² (DIN 53 456)

Tabelle 4

Eigenschaften der nicht erfindungsgemäßen Polyurethanelastomeren entsprechend Beispiel 7 bis 10

| Prüfung | DIN-Norm | Maßeinheit | 7 | 8 | 9 | 10 |
|---|---|---|---|---|---|---|
| Zugfestigkeit | 53 504 | MPa | 64,8 | 83,9 | 60,6 | keine Verarbeitungsmöglichkeit |
| Bruchdehnung | 53 504 | % | 59 | 107 | 82 | |
| Weiterreißwiderstand | 53 515 | kN/m | 125 | 217 | 248 | |
| Biege-E-Modul (RT) | 53 452 | MPa | 2288 | 2112 | 2202 | |
| Biegespannung σbB (RT) | 53 452 | MPa | 109 | 96,9 | 104 | |
| Biegespannung σbB (-20° C) | 53 452 | MPa | 150 | 140 | 147 | |
| Kerbschlagzähigkeit -20° C | 53 453 | $KJ/m^2$ | 2,9 | 4,9 | 3,8 | |
| Durchstoßversuch -20° C | 53 443 | J | 13,0 | 1,1 | 7,1 | |
| Bruchbild bei Durchstoßversuch | | | splitternd | splitternd | splitternd | |
| therm. Längenausdehnungskoeffizient | 53 752 | $K^{-1} \bullet 10^{-6}$ | 199 | | | |
| Shore Härte D | 53 505 | | 82 | | | |

Nicht erfindungsgemäße Beispiele 11 bis 16

Versuch 11

Hier handelt es sich im wesentlichen um eine Nachstellung von Beispiel 2c der DE-A- 2 854 409 (US-A- 4 342 847) mit folgender Rezeptur:

Aa) 53,34 Gew.-% 4,4-Diisocyanatodiphenylmethan, enthaltend ca. 2,5 Gew.-% 2,4′-Isomeres

Ab) 17,34 Gew.-% Butandiol-1,4

Ac) 20,89 Gew.-% Ethylenglykol-Butandiol-1,4-adipat, Molekulargewicht 2000

0,14 Gew.-% 2,2′-Tetraisopropyl-diphenylcarbodiimid

0,29 Gew.-% Stearlyamid

Das NCO/OH-Verhältnis beträgt 1,03:1

Dieses thermoplastische Polyurethanelastomer wurde im Verhältnis 90/10 mit Pfropfkautschuk während der Reaktion geblendet.

Die Eigenschaften dieses Elastomeres sind bezogen auf die Steifigkeit nicht befriedigend. Bei der Verarbeitung auf einer Spritzgießmaschine konnten keine homogenen Spritzlinge mit optisch guter Oberfläche hergestellt werden.

Eine Auflistung der Eigenschaften der nicht erfindungsgemäßen Versuche ist in Tabelle 4a erfolgt.

Beispiel 12 bis 14

Hier wurde auf den Pfropfkautschuk zusätzlich TPU-Hartsegment aufgepfropft. Im Gegensatz zur Versuchsbeschreibung im Beispiel 1 wurde hier das Pfropfkautschukgranulat über eine Schüttelrinne und die Antioxidantien (Ac) über eine Dosierschnecke in Gehäuse 1 der Zweischneckenknetmaschine eingebracht, die Komponenten Aa) und Ab) unter Bedingungen wie im Beispiel 1 beschrieben, in Gehäuse 7.

Die Rezeptur lautet:

Aa) 74,34 Gew.-% 4,4-Diisocyanatodiphenylmethan, enthaltend ca. 2,5 Gew.-% 2,4′-Isomeres

Ab) 24,85 Gew.-% Butandiol-1,4

2,49 Gew.-% Hexandiol-1,6

Ac) 0,37 Gew.-% Pentaerythrityl-tetrakis-3-(3,5-di-t-butyl-4-hydroxyphenyl)-propionat (Irganox 1010 Ciba Geigy)

0,19 Gew.-% 2,6-Di-t-butyl-4-methyl-phenol

0,25 Gew.-% Cyanacrylsäureester (UV-Absorber 340 Bayer AG)

Das NCO/OH Verhältnis beträgt 1,00:1

Das Verhältnis Hartsegment zu Pfropfkautschuk beträgt beim Versuch

| 12 | 13 | 14 |
|---|---|---|
| 90/10 | 70/30 | 50/50 |

Alle Beispiele zeigten sehr schlechte Verarbeitungseigenschaften und konnten nicht zu homogenen Probekörpern abgespritzt werden. Das Kälteschlagverhalten der beispiele 12 und 13 ist sehr schlecht. Beim Beispiel 14 überwiegen die Eigenschaften des Pfropfkautschuks (siehe Tabelle 4a).

Beispiel 15

Hier wurde im wesentlichen entsprechend Beispiel 1a der US-A- 4 342 847 zu

56,43 Gew.-% Pfropfkautschuk

11,28 Gew.-% Butandiol-1,4

und 32,28 Gew.-% 4,4-Diisocyanatodiphenylmethan, enthaltend ca. 2,5 Gew.-% 2,4′-Isomeres

wie in Beispiel 12 beschrieben zugefahren.

Beispiel 16

Gemäß Beispiel 25 der US-A 4 179 479 wurden umgesetzt:
39,41 Gew.-% Polyester-TPU (ca. 55 Shore D)
59,11 Gew.-% Polycarbonat
0,99 Gew.-% Acrylkautschuk/Acryloid K147
0,49 Gew.-% Acrawachs C

Die Dosierung der Granulate erfolgt über Schüttelrinnen, die der Pulver über Dosierschnecken in Gehäuse 1 der Zweischneckenknetmaschine.

Die Eigenschaften dieses sehr weichen Materials (68 Shore D) sind in Bezug auf Weiterreißwiderstand und Bruchdehnung sehr schlecht.

Tabelle 4a

| Eigenschaften der nicht erfindungsgemäßen Produkte entsprechend Beispiel 11 bis 16 | | | | | | | | |
|---|---|---|---|---|---|---|---|---|
| Prüfung | DIN-Norm | Maßeinheit | 11 | 12 | 13 | 14 | 15 | 16 |
| Zugfestigkeit | 53 504 | MPa | 72,0 | 53,0 | 52,2 | 58,1 | 45,7 | 37,9 |
| Bruchdehnung | 53 504 | % | 264 | 40 | 90 | 120 | 174 | 62 |
| Weiterreißwiderstand | 53 515 | kN/m | 349 | - | 299 | 330 | 249 | 95,7 |
| Biege-E-Modul | 53 452 | MPa | 1310 | 2272 | 2066 | 2049 | 1773 | 1245 |
| Biegespannung s bB (RT) | 53 452 | MPa | 54,3 | 109 | 94,2 | 95 | 68,3 | 58,0 |
| Durchstoßversuch (-20 °C) | 53 443 | J | 85,8 | 4,3 | 1,9 | 78,4 | 19,9 | |
| Bruchbild bei Durchstoßversuch | | | zäh | splitternd | | zäh | splitternd | |
| Shore-Härte D | 53 505 | | 71 | 82 | 83 | 81 | 76 | 68 |
| Thermoplastische Verarbeitbarkeit | - | | ←schlecht→ | | | | | |

## Ansprüche

1. Thermoplastische Polymermischung aus wenigstens einem thermoplastischen Polyurethan A und wenigstens einem weiteren Thermoplasten B bestehend im wesentlichen aus einer Mischung aus
A) 70 bis 95 Gew.-Teilen eines thermoplastischen Polyurethans erhältlich durch Reaktion von
a) einem Diisocyanat Aa)
b) wenigstens einem vorzugsweise kurzkettigen Kettenverlängerer Ab), insbesondere einem Diol, vorzugsweise mit einem Molekulargewicht von maximal 399
c) einer Hydroxylgruppen (oder Aminogruppen) -haltigen höhermolekularen Verbindung Ac), vorzugsweise mit einem Molekulargewicht von 600 bis 6000
B) wenigstens einem thermoplastischen Terephthalsäureester B, gegebenenfalls in Abmischung mit wenigstens einer weiteren thermoplastischen Komponente C, wobei auf 70 bis 95 Gew.-Teile A 30 bis 5 Gew.-Teile B + C enthalten sind
mit der Maßgabe, daß, bezogen auf die Summe Aa) bis Ac) der Gewichtsanteil von Ac) 5 bis 20 Gew.-% beträgt und daß das Verhältnis NCO-Gruppen der Komponente Aa) zu den Zerewitinoff-aktiven Gruppen der Komponenten Ab) und Ac) 0,9 bis 1,15 beträgt.

2. Polymermischung nach Anspruch 1, dadurch gekennzeichnet, daß zusätzlich zum Diisocyanat Aa) ein höherfunktionelles Isocyanat eingesetzt wird.

3. Polymermischung nach wenigstens einem der vorhergehenden Ansprüche, dadurch gekennzeichnet, daß der Kettenverlängerer Ab) ein Polyalkohol, ein Polyamin oder ein Aminoalkohol ist.

4. Polymermischung nach wenigstens einem der vorhergehenden Ansprüche, dadurch gekennzeichnet, daß die Hydroxylgruppen-haltige höhermolekulare Verbindung Ac) ein Polyetherdiol ist.

5. Polymermischung nach wenigstens einem der vorhergehenden Ansprüche, dadurch gekennzeichnet, daß der Terephthalsäureester B Polybutylenterephthalat ist.

6. Polymermischung nach wenigstens einem der vorhergehenden Ansprüche, dadurch gekennzeichnet, daß als Komponente C ein Acrylnitril/Butadien/Styrol-Pfropfcopolymerisat (ABS) oder ein Derivat davon oder ein Polycarbonat enthalten ist.

7. Polymermischung nach Anspruch 1 - 6, dadurch gekennzeichnet, daß die Shorehärte D der Mischung 72 - 90, bevorzugt 75 - 90, und der E-Module > 800 MPa, bevorzugt 1.400 - 3.000 MPa beträgt.

8. Verfahren zur Herstellung thermoplastischer Polymermischungen gemäß Anspruch 1, dadurch gekennzeichnet, daß man in einer Zweischneckenknetmaschine in einer ersten Einspeisstelle die Komponenten Aa) bis Ac) und in einer danach angeordneten Einspeisstelle die Komponenten B) und gegebenenfalls C) einspeist.

9. Thermoplastische Formkörper und Verbundwerkstoffe daraus enthaltend eine Polymermischung, dadurch gekennzeichnet, daß die Polymermischung wenigstens einem der vorhergehenden Ansprüche entspricht.

10. Verbundwerkstoffe nach Anspruch 9, dadurch gekennzeichnet, daß sie mit Metallen verbunden sind.